# EUROPÄISCHE PATENTSCHRIFT

(11) **EP 4 204 698 B1**
(45) Veröffentlichungstag und Bekanntmachung des Hinweises auf die Patenterteilung: **01.04.2026**
(21) Anmeldenummer: 21745725.8
(22) Anmeldetag: 14.07.2021
(51) Int. Cl.: F16C 3/02, F16C 17/02, F16C 33/10

(54) **HUBKOLBENPUMPE**
RECIPROCATING PUMP
POMPE ALTERNATIVE

(30) Priorität: 28.08.2020 DE 102020210868
(43) Veröffentlichungstag der Anmeldung: 05.07.2023
(73) Patentinhaber: Robert Bosch GmbH, 70442 Stuttgart (DE)
(72) Erfinder: WOLF, Martin, 5411 Oberalm (AT)
(86) Internationale Anmeldenummer: PCT/EP2021/069561
(87) Internationale Veröffentlichungsnummer: WO 2022/042932

(56) Entgegenhaltungen:
- EP-A1- 2 921 725
- DE-A1- 102011 085 712
- JP-A- H07 217 638

## Beschreibung

Die Erfindung betrifft eine Hubkolbenpumpe mit den Merkmalen des Anspruchs 1.

### Stand der Technik

Aus der DE 10 2012 212 154 A1 geht beispielhaft eine als Hubkolbenpumpe ausgeführte Hochdruckpumpe zum Fördern eines Fluids, insbesondere Kraftstoff, hervor. Die Pumpe umfasst eine Antriebswelle mit wenigstens einem Nocken, an dem mittelbar über eine Laufrolle ein Kolben abgestützt ist. Andernends ist der Kolben in einem Zylinder aufgenommen, so dass der Kolben bei einer Rotation der Antriebswelle über den Nocken in einer Hubbewegung antreibbar ist. Die Antriebswelle ist über wenigstens ein Wellengleitlager gelagert. Das Wellengleitlager umfasst eine Lagerbuchse, in welcher die Antriebswelle unter Ausbildung eines Ringspalts abschnittsweise aufgenommen ist. Der Ringspalt steht in fluidleitender Verbindung mit einem Schmierraum, so dass das Wellengleitlager mit Schmierflüssigkeit aus dem Schmierraum geschmiert und gekühlt wird. Zur Erhöhung der Schmiermenge weist die Antriebswelle im Bereich des Wellengleitlagers wenigstens eine einen Kanal ausbildende axiale Aussparung auf.

Aufgrund der Funktionsweise von Hubkolbenpumpen treten in ihren Lagern periodisch wechselnde dynamische Lagerkräfte auf. Diese hängen insbesondere von der Anzahl der Nocken bzw. der hierüber angetriebenen Förderelemente sowie deren Abstand zu den jeweiligen Lagerstellen ab. In Abhängigkeit von den dynamischen Lagerkräften, insbesondere bei Lastspitzen, kann es kurzzeitig zu einer Mischreibung kommen. Das heißt, dass es in Ermangelung eines durchgehenden Schmierfilms zu einem Bauteilkontakt kommt. Dies gilt es zu vermeiden, da der Bauteilkontakt den Verschleiß fördert.

DE 10 2011 085712 A1 offenbart eine Hubkolbenpumpe gemäß dem Oberbegriff des Anspruchs 1

Die vorliegende Erfindung ist daher mit der Aufgabe befasst, ein Radialgleitlager für dynamische Lagerkräfte anzugeben, das auch bei Lastspitzen eine hydrodynamische Radialkraftübertragung ermöglicht. Das heißt, dass es nicht zu einer Mischreibung kommt und somit ein erhöhter Verschleiß vermieden wird.

Zur Lösung der Aufgabe werden das Radialgleitlager mit den Merkmalen des Anspruchs 1 sowie die Hubkolbenpumpe mit den Merkmalen des Anspruchs 7 vorgeschlagen. Vorteilhafte Weiterbildungen der Erfindung sind den jeweiligen Unteransprüchen zu entnehmen. Darüber hinaus wird ein Verfahren zur Schmierung eines dynamisch belasteten Radialgleitlagers angegeben.

### Offenbarung der Erfindung

Die vorgeschlagene Hubkolbenpumpe mit mindestens einem Radialgleitlager umfasst einen an einer Welle, insbesondere an einer Nocken- oder Kurbelwelle, ausgebildeten Lagerzapfen sowie eine den Lagerzapfen umgebende Lagerbuchse mit einer im Querschnitt kreisförmigen Gleitfläche. Erfindungsgemäß weist der Lagerzapfen zur Ausbildung eines in Umfangsrichtung variierenden Schmierspalts zwischen dem Lagerzapfen und der Lagerbuchse eine im Querschnitt von der Kreisform abweichende Gleitfläche auf. Die Welle, insbesondere Nockenwelle, der vorgeschlagenen Hubkolbenpumpe umfasst vorzugsweise einen ersten und einen zweiten Lagerzapfen. Beide Lagerzapfen weisen eine im Querschnitt von der Kreisform abweichende Gleitfläche auf. Die Welle ist somit über mindestens zwei erfindungsgemäße Radialgleitlager abgestützt. Die beiden Lagerzapfen der Radialgleitlager sind zueinander in einem axialen Abstand angeordnet. Vorzugsweise ist zumindest ein Lagerzapfen endseitig angeordnet bzw. bildet einen Endabschnitt der Welle aus. Die zugehörige Lagerbuchse kann somit durch eine Gehäusebohrung, insbesondere eine Sacklochbohrung, oder eine hierin eingesetzte Lagerbuchse ausgebildet werden.

In Abhängigkeit von der konkreten Ausgestaltung der Hubkolbenpumpe, insbesondere in Abhängigkeit von der Anzahl der Förderelemente und deren Abstand zum jeweiligen Radialgleitlager, können in den Lagern unterschiedliche dynamische Lagerkräfte bzw. zeitlich versetzte Lastspitzen auftreten. Die Gleitflächen der beiden Lagerzapfen sind im Querschnitt identisch geformt und in ihrer Winkellage zueinander versetzt. Das heißt, dass beide Lagerzapfen die gleiche Anzahl von Abflachungen bzw. Vorsprüngen aufweisen, diese jedoch eine andere Winkellage einnehmen. Auf diese Weise kann die Winkellage der Abflachungen bzw. Vorsprünge den jeweiligen dynamischen Lagerkräften angepasst werden.

Aufgrund des in Umfangsrichtung variierenden Schmierspalts variiert die über den Schmierspalt eingezogene Schmiermenge. Je größer der Schmierspalt ist, desto mehr Schmiermedium kann eingezogen bzw. aufgenommen werden. Die zusätzliche Schmiermenge, die idealerweise in einer Niedriglastphase aufgenommen wird, dient in der anschließenden Hochlastphase als zusätzliche Verdrängungsmenge. Diese fördert die Ausbildung eines durchgehenden hydrodynamischen Schmierfilms zwischen dem Lagerzapfen und der Lagerbuchse, so dass eine sichere Bauteiltrennung bewirkt wird. Das heißt, dass ein Mischreibungsbetrieb vermieden wird. Entsprechend gering ist der Lagerverschleiß.

Bevorzugt ist die Geometrie des Lagerzapfens derart gewählt, dass sich der Schmierspalt in Umfangsrichtung stetig verengt und weitet. Dadurch ist sichergestellt, dass die zusätzlich eingezogene Schmiermenge nicht ungenutzt im Kreis gefördert wird, sondern in der Hochlastphase verdrängt wird. Die Gefahr eines unnützen im Kreis Förderns besteht insbesondere dann, wenn die Gleitfläche Ausnehmungen aufweist, beispielsweise zur Ausbildung von Schmiertaschen und/oder eines axialen Kanals entsprechend dem eingangs genannten Stand der Technik.

Des Weiteren bevorzugt ist die Geometrie des Lagerzapfens derart gewählt, dass bei niedriger Lagerlast der Schmierspalt größer als bei hoher Lagerlast ist. Denn der niedrige Druck im Schmierspalt während einer Niedriglastphase fördert das Einziehen einer zusätzlichen Schmiermenge über den vergrößerten Schmierspalt. In der anschließenden Hochlastphase wird diese Menge dann aufgrund des ansteigenden Drucks und den sich verengenden Schmierspalt wieder verdrängt.

In Abhängigkeit von dem konkreten Anwendungsfall kann das Radialgleitlager eine oder mehrere Hochlastphasen über eine vollständige Umdrehung des Lagerzapfens aufweisen. Das heißt, dass ein oder mehrere Lastwechsel über eine Umdrehung des Lagerzapfens auftreten. Bevorzugt ändert sich mit jedem Lastwechsel auch der Schmierspalt, und zwar in der Weise, dass er sich bei einem Wechsel von niedriger Last zu hoher Last verengt und bei einem Wechsel von hoher Last zu niedriger Last weitet. Die Anzahl der Lastwechsel über eine Umdrehung des Lagerzapfens bestimmt somit dessen Geometrie.

Bevorzugt weist die Gleitfläche des Lagerzapfens im Querschnitt mindestens eine gerundete Abflachung und/oder mindestens einen gerundeten Vorsprung auf. Die Querschnittsform kann beispielsweise elliptisch sein. In diesem Fall weist die Geometrie des Lagerzapfens zwei gerundete Abflachungen bzw. zwei gerundete Vorsprünge auf. Durch die gerundete Ausführung sind die Übergänge fließend.

Im Querschnitt kann die Gleitfläche des Lagerzapfens Insbesondere aus mehreren Teilkreisbögen mit unterschiedlichen Radien zusammengesetzt sein. Ein großer Radius ermöglicht die Ausbildung einer gerundeten Abflachung, ein kleiner Radius die Ausbildung eines gerundeten Vorsprungs. Die Anzahl der gerundeten Abflachungen bzw. der gerundeten Vorsprünge entspricht vorzugsweise der Anzahl der Lagerlastwechsel über eine Umdrehung der Welle.

Ferner bevorzugt ist der Lagerzapfen im Querschnitt um einen Winkel α drehsymmetrisch ausgebildet, das heißt, dass bei einer Drehung des Lagerzapfens um den Winkel α, dieser sich auf sich selbst abbildet. Der Winkel α beträgt vorzugsweise 180°, 120° oder 90°.

Durch die im Querschnitt des Lagerzapfens drehsymmetrische Ausbildung sind alle Abflachungen bzw. Vorsprünge jeweils in gleichem Winkelabstand zueinander angeordnet. Beträgt der Winkel α 180°, weist der Lagerzapfen im Querschnitt zwei Abflachungen bzw. zwei Vorsprünge auf. Bei einem Winkel α von 120° beträgt die Anzahl der Abflachungen bzw. Vorsprünge drei und bei einem Winkel α von 90° beträgt die Anzahl vier. Die Geometrie des Lagerzapfens korrespondiert somit mit den periodisch auftretenden Lastwechseln im Lager.

Da die Vorteile der Erfindung insbesondere bei dynamisch belasteten Radialgleitlagern zum Vorschein treten, wird ferner vorgeschlagen, dass die den Lagerzapfen aufweisende Welle eine Nocken- oder Kurbelwelle ist. Da die Nockenwelle insbesondere zum Antreiben einer Hubkolbenpumpe eingesetzt werden kann, wird des Weiteren eine Hubkolbenpumpe mit mindestens einem erfindungsgemäßen Radialgleitlager vorgeschlagen.

Bei der Schmierung eines dynamisch belasteten Radialgleitlagers, umfassend einen Lagerzapfen und eine den Lagerzapfen unter Ausbildung eines Schmierspalts aufnehmende Lagerbuchse wird der Schmierspalt durch Verwendung eines Lagerzapfens mit einer im Querschnitt von der Kreisform abweichenden Gleitfläche
- im Übergang von einer Hochlastphase zu einer Niedriglastphase stetig vergrößert und
- im Übergang von einer Niedriglastphase in eine Hochlastphase stetig verkleinert.

Der sich während einer Niedriglastphase vergrößernde Schmierspalt führt zur Aufnahme einer zusätzlichen Schmiermenge, so dass während der anschließenden Hochlastphase eine zusätzliche Verdrängungsmenge zur Verfügung steht, die über den sich verengenden Schmierspalt wieder ausgequetscht wird. Dies hat zur Folge, dass die Bauteile Lagerzapfen und Lagerbuchse durch einen hydrodynamischen Schmierfilm sicher getrennt werden. Eine Mischreibung und ein damit einhergehender erhöhter Verschleiß werden somit vermieden.

Um einen sich im Übergang von einer Hochlastphase zu einer Niedriglastphase stetig vergrößernden und im Übergang von einer Niedriglastphase in eine Hochlastphase stetig verkleinernden Schmierspalt auszubilden, kann der Lagerzapfen insbesondere eine der vorstehend in Verbindung mit dem erfindungsgemäßen Radialgleitlager beschriebenen Geometrien aufweisen.

Die Erfindung wird nachfolgend anhand der beiliegenden Zeichnungen näher erläutert. Diese zeigen:
Fig. 1 a) und b) jeweils einen schematischen Querschnitt durch ein erfindungsgemäßes Radialgleitlager a) in Richtung des Nockens gesehen, b) vom Nocken weg gesehen,
Fig. 2 einen schematischen Längsschnitt durch eine Nockenwelle mit zwei erfindungsgemäßen Radialgleitlagern,
Fig. 3 a) einen schematischen Querschnitt durch das erste Radialgleitlager der Fig. 2 und b) einen schematischen Querschnitt durch das zweite Radialgleitlager der Fig. 2, und
Fig. 4 eine schematische Darstellung des Kräfteverlaufs in den beiden Radialgleitlagern der Fig. 2.

### Ausführliche Beschreibung der Zeichnungen

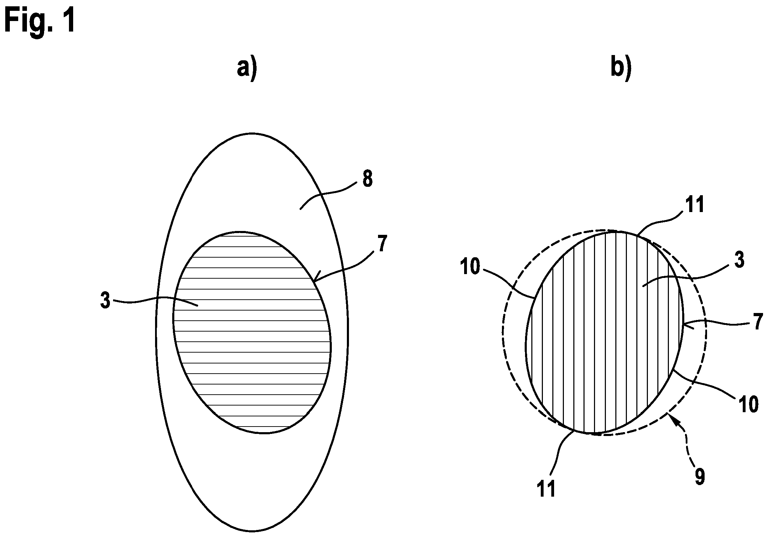

Der Fig. 1a) ist beispielhaft ein Lagerzapfen 3 für ein erfindungsgemäßes Radialgleitlager 1 zu entnehmen, welcher im Querschnitt eine von der Kreisform abweichende Gleitfläche 7 aufweist. Der Lagerzapfen 3 kann insbesondere der Lagerung einer Nockenwelle (nicht dargestellt) mit mindestens einem Nocken 8 dienen, da in diesem Fall das Lager bei einer Rotation der Welle dynamisch belastet wird. Der Nocken 8 ist vorliegend als Doppelnocken ausgeführt.

Zur Veranschaulichung der Geometrie des Lagerzapfens 3 ist dieser in der Fig. 1b) von einer Hüllkurve 9 umgeben, welche die Form eines Idealkreises aufweist. Der im Querschnitt dargestellte Lagerzapfen 3 weist demgegenüber die Form einer Ellipse auf und bildet zwei Abflachungen 10 sowie zwei Vorsprünge 11 aus.

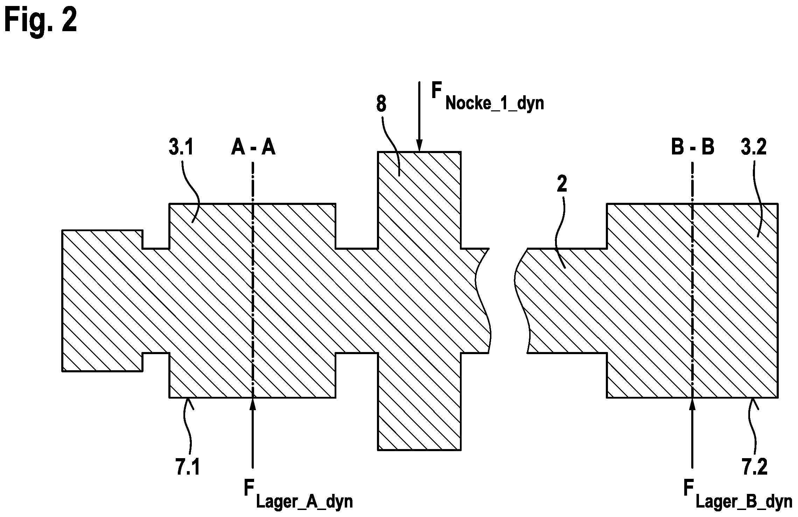

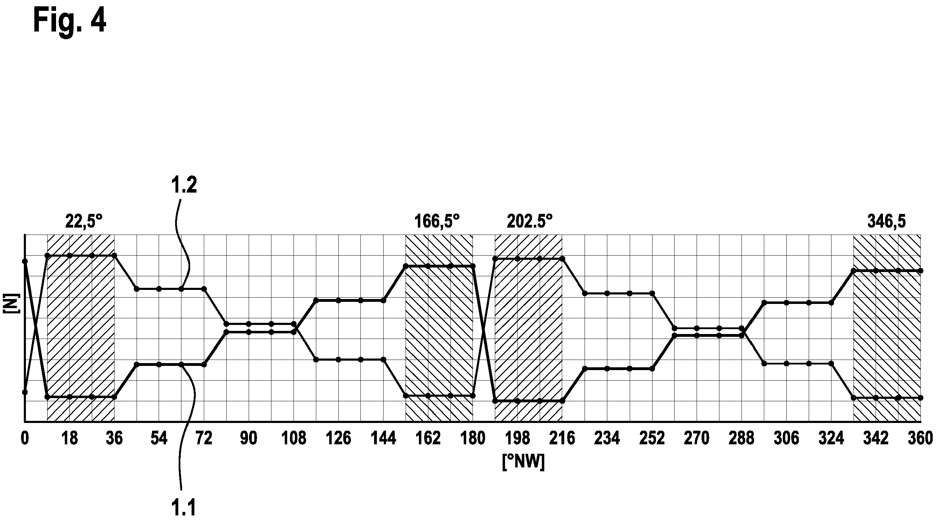

In der Fig. 2 ist eine Welle 2 mit einem Nocken 8 und zwei Lagerzapfen 3.1, 3.2 dargestellt. Da die Welle 2 unterbrochen dargestellt ist, kann sie mehr als nur einen Nocken 8 aufweisen, beispielsweise zwei, drei, vier, fünf oder mehr Nocken 8, aufweisen. Diese können als Einfach- oder Mehrfachnocken, beispielsweise als Doppel- oder Dreifachnocken ausgeführt sein. Das heißt, dass jeweils ein Nocken 8 mindestens einen Vorsprung aufweist. Die Vorsprünge der mehreren Nocken 8 sind vorzugsweise in ihrer Winkellage versetzt zueinander angeordnet, um eine möglichst gleichmäßige Belastung der Wellenlager zu erreichen. Prinzipbedingt treten in den Lagern jedoch dynamische Lagerkräfte mit Lastspitzen auf, die - wie beispielhaft in der Fig. 4 dargestellt - zeitlich versetzt auftreten können.

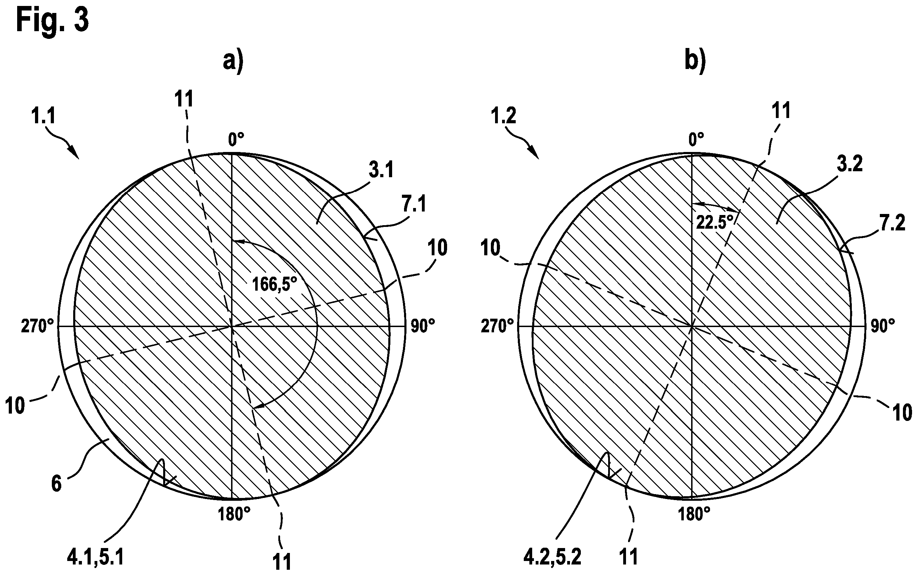

Wie beispielhaft in der Fig. 4 dargestellt, treten bei einer Umdrehung einer Welle um 360° sowohl in einem ersten Radialgleitlager 1.1 als auch in einem zweiten Radialgleitlager 1.2 zur Lagerung der Welle jeweils zwei Lastspitzen bzw. Hochlastphasen auf. Diese liegen bei 166, 5° und 346,5° für das erste Radiallager 1.1 und bei 22,5° und 202,5° für das zweite Radialgleitlager 1.2 (siehe schraffierte Flächen). Um in den jeweiligen Hochlastphasen eine ausreichende Schmierung und damit die Ausbildung eines hydrodynamischen Schmierfilms zu gewährleisten, weisen die Lagerzapfen 3.1, 3.2 der beiden Radialgleitlager 1.1, 1.2 jeweils eine im Querschnitt von der Kreisform abweichende Geometrie auf. Die Geometrien sind in der Fig. 3a) und der der Fig. 3b) dargestellt.

Fig. 3a) zeigt das erste Radiallager 1.1 mit einem ersten Lagerzapfen 3.1, der in einer Lagerbuchse 4.1 mit einer im Querschnitt kreisförmigen Gleitfläche 5.1 aufgenommen ist. Der Lagerzapfen 3.1 weist eine Gleitfläche 7.1 auf, die im Querschnitt eine von der Kreisform abweichende Form besitzt bzw. elliptisch ausgebildet ist. Das heißt, dass zwei Abflachungen 10 und zwei Vorsprünge 11 ausgebildet werden, und zwar korrespondierend zum in der Fig. 4 dargestellten Kraftverlauf im ersten Radialgleitlager 1.1.

Das in der Fig. 3b) dargestellte zweite Radialgleitlager 1.2 weist einen zweiten Lagerzapfen 3.2 auf, der in einer Lagerbuchse 4.2 mit einer im Querschnitt kreisförmigen Gleitfläche 5.2 aufgenommen ist. Der Lagerzapfen 3.2 selbst weist im Querschnitt wiederum eine elliptische Gleitfläche 7.2 mit zwei Abflachungen 10 und zwei Vorsprüngen 11 auf. Die Abflachungen 10 bzw. die Vorsprünge 11 des zweiten Lagerzapfens 3.2 sind jedoch in ihrer Winkellage versetzt zu den Abflachungen 10 bzw. Vorsprüngen 11 des ersten Lagerzapfens 3.1 angeordnet, und zwar korrespondierend zum in der Fig. 4 dargestellten Kraftverlauf im zweiten Radialgleitlager 1.2.

Die Abflachungen 10 führen zu einer Aufweitung eines zwischen dem jeweiligen Lagerzapfen 3.1, 3.2 und der jeweiligen Lagerbuchse 4.1, 4.2 verbleibenden Schmierspalts 6, so dass in einer Niedriglastphase des jeweiligen Radialgleitlagers 1.1, 1.2 der Schmierspalt 6 maximal ist. Auf diese Weise kann während einer Niedriglastphase eine größere Schmiermenge eingezogen werden. Mit Übergang von der Niedriglastphase in eine Hochlastphase verengt sich der Schmierspalt 6 wieder, so dass die zusätzliche Schmiermenge aus dem Schmierspalt 6 wieder verdrängt wird. Ein Kontakt zwischen dem Lagerzapfen 3.1, 3.2 und der Lagerbuchse 4.1, 4.2 wird durch die im Schmierspalt 6 verbleibende Schmiermenge, die einen hydrodynamischen Schmierfilm ausbildet, sicher vermieden.

## Patentansprüche

1. Hubkolbenpumpe mit mindestens einem Radialgleitlager (1.1, 1.2), umfassend einen an einer Welle (2), insbesondere an einer Nocken- oder Kurbelwelle, ausgebildeten Lagerzapfen (3.1, 3.2) sowie eine den Lagerzapfen (3.1, 3.2) umgebende Lagerbuchse (4.1, 4.2) mit einer im Querschnitt kreisförmigen Gleitfläche (5.1, 5.2), wobei
der Lagerzapfen (3.1, 3.2) zur Ausbildung eines in Umfangsrichtung variierenden Schmierspalts (6) zwischen dem Lagerzapfen (3.1, 3.2) und der Lagerbuchse (4.1, 4.2) eine im Querschnitt von der Kreisform abweichende Gleitfläche (7) aufweist
**dadurch gekennzeichnet,**
**dass** die Welle (2) einen ersten und einen zweiten Lagerzapfen (3.1, 3.2) umfasst und beide Lagerzapfen (3.1, 3.2) eine im Querschnitt von der Kreisform abweichende Gleitfläche (7.1, 7.2) aufweisen, wobei die Gleitflächen (7.1, 7.2) der beiden Lagerzapfen (3.1, 3.2) im Querschnitt identisch geformt und in ihrer Winkellage zueinander versetzt sind.

2. Hubkolbenpumpe nach Anspruch 1,
**dadurch gekennzeichnet, dass** sich der Schmierspalt (6) in Umfangsrichtung stetig verengt und/oder weitet.

3. Hubkolbenpumpe nach einem der vorhergehenden Ansprüche,
**dadurch gekennzeichnet, dass** die Gleitfläche (7) des Lagerzapfens (3.1, 3.2) im Querschnitt mindestens eine gerundete Abflachung (10) und/oder mindestens einen gerundeten Vorsprung (11) aufweist.

4. Hubkolbenpumpe nach einem der vorhergehenden Ansprüche,
**dadurch gekennzeichnet, dass** die Gleitfläche (7) des Lagerzapfens (3.1, 3.2) im Querschnitt aus mehreren Teilkreisbögen mit unterschiedlichen Radien (R₁, R₂) zusammengesetzt ist.

5. Hubkolbenpumpe nach einem der vorhergehenden Ansprüche,
**dadurch gekennzeichnet, dass** der Lagerzapfen (3.1, 3.2) im Querschnitt um einen Winkel (α) drehsymmetrisch ausgebildet ist, wobei vorzugsweise der Winkel (α) 180°, 120° oder 90° beträgt.

## Claims

1. Reciprocating piston pump having at least one radial plain bearing (1.1, 1.2), comprising a journal (3.1, 3.2) formed on a shaft (2), in particular on a camshaft or crankshaft, and a bearing bushing (4.1, 4.2) surrounding the journal (3.1, 3.2) and having a cross-sectionally circular sliding surface (5.1, 5.2), wherein
in order to form a lubrication gap (6), which varies in the circumferential direction, between the journal (3.1, 3.2) and the bearing bushing (4.1, 4.2), the journal (3.1, 3.2) has a sliding surface (7) which differs from the circular shape in cross section,
**characterized**
**in that** the shaft (2) comprises a first and a second journal (3.1, 3.2) and the two journals (3.1, 3.2) have a sliding surface (7.1, 7.2) which differs from the circular shape in cross section, the sliding surfaces (7.1, 7.2) of the two journals (3.1, 3.2) being formed identically in cross section and being offset in their angular position to each other.

2. Reciprocating piston pump according to Claim 1,
**characterized in that** the lubrication gap (6) is continuously narrowed and/or widened in the circumferential direction.

3. Reciprocating piston pump according to either of the preceding claims,
**characterized in that** the sliding surface (7) of the journal (3.1, 3.2) has at least one rounded flat surface (10) and/or at least one rounded projection (11) in cross section.

4. Reciprocating piston pump according to any of the preceding claims,
**characterized in that** the sliding surface (7) of the journal (3.1, 3.2) is assembled in cross section from a plurality of partial circular arcs with different radii (R₁, R₂).

5. Reciprocating piston pump according to any of the preceding claims,
**characterized in that** the journal (3.1, 3.2) is rotationally symmetrical in cross section about an angle (α), the angle (α) preferably being 180°, 120° or 90°.

## Revendications

1. Pompe à piston alternative comprenant au moins un palier lisse radial (1.1, 1.2), présentant un tourillon (3.1, 3.2) formé sur un arbre (2), en particulier sur un arbre à cames ou un vilebrequin, ainsi qu'une douille de palier (4.1, 4.2) entourant le tourillon (3.1, 3.2) et présentant une surface de glissement (5.1, 5.2) de section transversale circulaire,
le tourillon (3.1, 3.2) présentant une surface de glissement (7) dont la section transversale s'écarte de la forme circulaire afin de former un interstice de lubrification (6) variant circonférentiellement entre le tourillon (3.1, 3.2) et la douille de palier (4.1, 4.2)
**caractérisée en ce que**
l'arbre (2) comprend un premier et un deuxième tourillons (3.1, 3.2) et les deux tourillons (3.1, 3.2) présentent une surface de glissement (7.1, 7.2) dont la section transversale s'écarte de la forme circulaire, les surfaces de glissement (7.1, 7.2) des deux tourillons (3.1, 3.2) présentant une forme identique en section transversale et étant décalées l'une par rapport à l'autre dans leur position angulaire.

2. Pompe à piston alternative selon la revendication 1,
**caractérisée en ce que** l'interstice de lubrification (6) se rétrécit et/ou s'élargit circonférentiellement de manière continue.

3. Pompe à piston alternative selon l'une des revendications précédentes, **caractérisée en ce que** la surface de glissement (7) du tourillon (3.1, 3.2) présente, en section transversale, au moins un méplat arrondi (10) et/ou au moins une saillie arrondie (11).

4. Pompe à piston alternative selon l'une des revendications précédentes, **caractérisée en ce que** la surface de glissement (7) du tourillon (3.1, 3.2) est composée, en section transversale, de plusieurs arcs de cercle partiels de rayons (R₁, R₂) différents.

5. Pompe à piston alternative selon l'une des revendications précédentes, **caractérisée en ce que** le tourillon (3.1, 3.2) est conçu de manière symétrique en rotation autour d'un angle (α) en section transversale, l'angle (α) étant de préférence de 180°, 120° ou 90°.
